# EUROPÄISCHE PATENTSCHRIFT

(11) **EP 0 423 517 B1**
(45) Veröffentlichungstag und Bekanntmachung des Hinweises auf die Patenterteilung: **15.12.1993**
(21) Anmeldenummer: 90118557.9
(22) Anmeldetag: 27.09.1990
(51) Int. Cl.: G01N 30/18, G01N 30/20

(54) **Dosiereinrichtung für Analysengeräte**
Dosing device for analytical instruments
Dispositif doseur pour appareils d'analyse

(30) Priorität: 18.10.1989 DE 3934699
(43) Veröffentlichungstag der Anmeldung: 24.04.1991
(73) Patentinhaber: BODENSEEWERK PERKIN-ELMER GMBH, D-88662 Überlingen (DE)
(72) Erfinder: Tomoff, Toma, W-7770 Überlingen (DE); Löchle, Viktor, W-7770 Überlingen (DE); Chlosta, Wolfgang, W-7770 Überlingen/Bodensee (DE); Klemm, Henry, W-7770 Überlingen (DE)
(74) Vertreter: Grünecker, Kinkeldey, Stockmair & Schwanhäusser Anwaltssozietät

(56) Entgegenhaltungen:
- DE-A- 3 037 014
- DE-A- 3 533 610
- US-A- 4 836 038

## Beschreibung

### Technisches Gebiet

Die Erfindung betrifft eine Dosiereinrichtung für Analysengeräte, insbesondere für die Flüssig-Chramatographie, enthaltend
(a) eine Dosierschleife,
(b) ein Umschaltventil mit einem stillstehenden Teil und einem gegenüber dem stillstehenden Teil zwischen einer ersten und einer zweiten Stellung beweglichen Teil, der einen Probeneinlaß aufweist und der mit einem Dichtkörper an dem stillstehenden Teil anliegt, wobei das Umschaltventil
   - in der ersten Stellung den Probeneinlaß mit einem Ende der Dosierschleife und das andere Ende der Dosierschleife mit einem Abfallanschluß verbindet und
   - in der zweiten Stellung ein Ende der Dosierschleife mit einem Trägerflüssigkeitsanschluß und das andere Ende der Dosierschleife mit einem Analysengeräteanschluß verbindet,
(c) eine Dosiernadel, welche durch einen Stellmechanismus mit ihrem vorderen Ende einmal in ein Probengefäß und einmal abdichtend in einen den Probeneinlaß des Umschaltentils bildenden, gerade durch den beweglichen Teil verlaufenden Probeneinlaßkanal einführbar ist und
(d) eine Probenpumpe, welche mit dem hinteren Ende der Dosiernadel verbunden ist und durch welche Probenflüssigkeit aus dem Probengefäß in die Dosiernadel einsaugbar ist, wenn sich das vordere Ende der Dosiernadel in dem Probengefäß befindet, und durch welche Probenflüssigkeit aus der Dosiernadel herausdrückbar ist und in die Dosierschleife übertragbar ist, wenn sich die Dosiernadel in dem Probeneinlaß des Umschaltventils befindet und das Umschaltventil in seiner ersten Stellung ist.

Das Analysengerät kann dabei eine chromatographische Trennsäule für die Flüssig-Chromatographie mit nachgeschaltetem Detektor sein. Das Analysengerät kann aber auch beispielsweise ein mit Fließinjektionstechnik arbeitendes Atomabsorptions- oder Atomemissions-Spektralphotometer sein. Die Erfindung ist überall anwendbar, wo Probenflüssigkeit mittels einer Dosiernadel in eine Dosierschleife eingebracht werden soll.

### Zugrundeliegende Stand der Technik

Bei einer bekannten Dosiereinrichtung sind Proben in Probengefäßen in einem Magazin angeordnet. Die Probengefäße bestehen aus Probenfläschchen, die durch ein Septum abgeschlossen sind. Eine Probenentnahmeeinheit sitzt an einem Transportarm, welcher programmiert über jedes der Probenfläschchen, über ein Spülgefäß oder über den Probeneinlaß eines Umschaltventils bewegbar ist. Die Probenentnahmeeinheit enthält eine Dosiernadel, die in ein Probenfläschchen einführbar ist, wobei sie das Septum durchsticht, in den Probeneinlaß oder in das Spülgefäß. Das Umschaltventil enthält einen Stator und einen gegenüber dem Stator zwischen einer ersten und einer zweiten Stellung verdrehbaren Rotor. Der Rotor weist den Probeneinlaß auf. Der Rotor liegt mit einem Dichtkörper an dem Stator an. Dabei verbindet das Umschaltventil in der ersten Stellung den Probeneinlaß mit einem Ende einer Dosierschleife und das andere Ende der Dosierschleife mit einem Abfallanschluß. In der zweiten Stellung verbindet das Umschaltventil ein Ende der Dosierschleife mit einem Trägerflüssigkeitsanschluß und das andere Ende der Dosierschleife mit einem Analysengeräteanschluß, also beispielsweise einem Anschluß, der zu einer chromatographischen Trennsäule führt. Das rückwärtige Ende der Dosiernadel ist über eine Kapillare mit einer Probenpumpe und mit einer Spülpumpe verbunden. Die Spülpumpe weist Rückschlagventile auf und saugt Trägerflüssigkeit an, die bei einem Spülvorgang durch die Dosiernadel hindurch in das Spülgefäß abgegeben werden kann. Die Dosiernadel und die Kapillare sind somit bis zur Spitze der Dosiernadel mit Trägerflüssigkeit gefüllt. Die Kapillare ist weiterhin mit einer Probenpumpe verbunden. Diese saugt ein Volumen von Trägerflüssigkeit an. Dadurch wird Trägerflüssigkeit aus der Dosiernadel zurückgesaugt, so daß ein anderes Medium, Luft oder Probenflüssigkeit von der Spitze her in die Dosiernadel eingesaugt wird.

Im Betrieb wird die Dosiernadel über ein Probenfläschchen gefahren, das sich in einer vorprogrammierten Magazinposition befindet. Die Dosiernadel durchsticht zunächst nur das Septum des Probenfläschchens ohne in die Flüssigkeit einzutauchen. Dann fährt die Dosiernadel wieder aus dem Probenfläschchen heraus. Nach Rückkehr in die Ausgangsposition wird über die Probenpumpe ein kleines Luftvolumen angesaugt. Dieses Luftvolumen dient als Trennpolster zwischen der Trägerflüssigkeit und der anzusaugenden Probenflüssigkeit. Nach einer Wartezeit durchsticht die Dosiernadel das Septum ein zweites Mal und taucht jetzt in die Probenflüssigkeit ein. Die Probenpumpe saugt ein vorprogrammiertes Probenvolumen sowie darüberhinaus ein vorprogrammiertes Überschußvolumen in die Dosiernadel und die Dosierkapillare. Die Dosiernadel wird dann angehoben. Der Transportarm fährt die Dosiernadel über den Probeneinlaß des Umschaltventils.

Bei der bekannten Dosiereinrichtung steht das Umschaltventil dabei zunächst in der zweiten Stellung, in welcher die Dosierschleife mit einem Trägerflüssigkeitsanschluß und einem Analysengeräteanschluß verbunden ist. In dieser Stellung wird ein Teil des Überschußvolumens in den Probeneinlaß gedrückt, um den Probeneinlaß mit Probenflüssigkeit zu spülen. Diese zum Spülen verwendete Probenflüssigkeit läuft zu einem Abfallgefäß. Nach einer Wartezeit wird das Umschaltventil in die erste Stellung gedreht. Die Probenpumpe drückt das vorprogrammierte Probenvolumen in die Dosierschleife. Das verdrängte Volumen an Trägerflüssigkeit fließt über eine Kapillare ab. Nach einer weiteren Wartezeit wird das Umschaltventil in die zweite Stellung verdreht. Das dosierte Probenvolumen wird von einem Trägerflüssigkeitsstrom, der über den Trägerflüssigkeitsanschluß von einer Trägerflüssigkeitspumpe zugeführt wird, zu dem Analysengerät, hier einer chromatographischen Trennsäule, transportiert. Die Probenpumpe drückt dann die Probenflüssigkeit und die angesaugte Luft in den Probeneinlaß und über diesen zu einem Abfallanschluß. Anschließend führt die Spülpumpe einen Hubzyklus aus. Hierdurch wird die Dosiernadel und der Probeneinlaß mit Trägerflüssigkeit gespült. Diese von der Spülpumpe geförderte Spülflüssigkeit läuft auch über den Probeneinlaß zum Abfallanschluß. Danach wird die Dosiernadel angehoben. Der Transportarm fährt die Dosiernadel in eine Ruhestellung über dem Spülgefäß.

Solche Anordnungen sind bekannt durch die DE-C2-30 30 396 oder die DE-C2-30 37 014.

In der DE-C2-30 30 396 ist zum Stand der Technik ein als Probeneinlaßventil dienendes Umschaltventil der vorliegenden Art beschrieben, bei welchem eine Dosiernadel bis an die Anlagefläche des Stars in den Rotor eingeführt wird, so daß sie nicht über die Anlagefläche hinaus in den Stator eindringt. Zu diesem Zweck hat die Dosierbohrung in dem Stator einen geringeren Durchmesser als die Dosiernadel. Nach dem Abgeben der Probe in die Dosierschleife erfolgt eine Verdrehung des Rotors in die zweite Stellung des Umschaltventils. Dabei verbleibt (die Dosiernadel in ihrer Stellung im Rotor. Das ist notwendig, damit nicht durch die Kolbenwirkung der Dosiernadel Probenflüssigkeit aus dem Stator in den Rotor zurückgesaugt wird. Dabei kratzt aber das Ende der Dosiernadel während des Umschaltvorganges an der Anlagefläche des Stators entlang. Das führt zu unerwünschtem Verschleiß und macht die Verwendung besonders gehärteter Anlageflächen erforderlich.

Nach der DE-C2-30 37 014 wird in die Dosiernadel vor dem Ansaugen der Probenflüssigkeit ein Luftvolumen angesaugt. Die Dosiernadel wird zum Einleiten der Probe in die Dosierschleife mit ihrem vorderen Ende durch eine Bohrung des Rotors hindurch bis in eine Dosierbohrung des Stators eingeführt. Nach dem Einleiten der Probe in die Dosierschleife wird das Luftvolumen in die Dosierschleife gedrückt. Die Dosiernadel wird dann vor dem Umschalten des Umschaltventils zurückgezogen. Durch die Kolbenwirkung beim Herausziehen der Dosiernadel wird dann nur Luft in den Rotor zurückgesaugt, während die Probenflüssigkeit vollständig in dem Stator verbleibt.

Bei der Dosiereinrichtung nach der DE-C2-30 30 396 ist das Ende der Dosiernadel an seinem Umfang abdichtend in der Dichtscheibe des Umschaltventils gehalten. Das ist auch bei bekannten, praktisch ausgeführten Geräten der Fall.

Dabei ist die Dichtung der Dosiernadel in dem Umschaltventil ungenügend. Die Dichtung der Dosiernadel unterliegt einem starken Verschleiß. Die Führung der Dosiernadel muß wegen der ungenügenden Dichtung nach jeder Dosierung gespült werden.

Weiterhin beeinflussen Volumen und Durchmesser der Dosierschleife die Dosierung. Das Septum des Probenfläschchens hat einen Einfluß auf die äußere Benetzung der Dosiernadel. Schließlich ist bei der Dosierung in die Probenschleife ein Gegendruck erforderlich, der durch einen Strömungswiderstand in der Abflußleitung erzeugt wird.

Die US-A-4 836 038, insbesondere Fig.6 und Spalte 10 oben zeigt eine Anordnung mit einem Einspritzrohr mit glattem Ende, welches plan an der Fläche 69 anliegt. Das Einspritzrohr erstreckt sich durch einen gerade durch den beweglichen Teil des Umschaltventils hindurchgehenden Probeneinlaßkanal.

Die DE-A1-32 23 852 betrifft ein Hochdruckventil zum Einspritzen einer Probe in ein Analysengerät, das beispielsweise mit Flüssigkeits-Chromatographie arbeitet. Das Hochdruckventil arbeitet in zwei Stellungen, zwischen denen nur ein kleiner Schwenkwinkel liegt. In seiner ersten Stellung gestattet das Hochdruckventil die Einspritzung der Probe in eine Trennsäule. In einer zweiten Stellung läßt das Ventil eine Pufferlösung in die Trennsäule einteten.

Die DE-C2-28 07 291 beschreibt eine Vorrichtung zum Einführen einer Flüssigkeitsprobe in einen Strom einer Trägerflüssigkeit. Es sind ein Haupt- und ein Nebenströmungsweg vorgesehen. Der Nebenströmungsweg nimmt die Probe auf. Durch eine erste und eine stromabwärts davon angeordnete zweite Ventilanordnung ist der Nebenströmungsweg einem Teil des Hauptströmungsweges parallelschaltbar. Die Probe wird mittels einer Hohlnadel in in den Nebenströmungsweg eingeführt. Zu diesem Zweck bildet die Hohlnadel einen Teil des Nebenströmungsweges und der stromabwärtigen Ventilanordnung. Die Längsbohrung der Hohlnadel ist mit einem Ende an die erste Ventilanordnung angeschlossen. Das andere Ende der Längsbohrung weist eine seitliche Öffnung auf. An die seitliche Öffnung schließt sich eine massive Spitze an. Die Hohlnadel ist in einem senkrechten Kanal zwischen einer ersten Position und einer zweiten Position beweglich. In der ersten Position ragt die Hohlnadel unten aus dem Kanal heraus. Die seitliche Öffnung liegt dann zur Aufnahme der Probe frei. In einer zweiten Position steht die seitliche Öffnung mit dem Hauptströmungsweg in Verbindung. Der senkrechte Kanal ist dann durch die massive Spitze nach unten abgedichtet.

Die DE-A1-35 33 610 betrifft eine Injektionseinrichtung für flüssige Proben. Eine flüssige Probe wird angesaugt, wenn eine Dosiernadel in eine untere Stellung gebracht wird. Die flüssige Probe wird durch eine Trägerflüssigkeit einer chromatographischen Trennsäule zugeführt, wenn die Dosiernadel in einer oberen Stellung ist.

Die GB-A-790 364 zeigt eine Einrichtung zum Abmessen und Abgeben genauer Volumina von Gasen an eine chromatographische Trennsäule. Zu diesem Zweck wird eine Pipette über zwei synchron betätigbare Ventile mit dem Gas gefüllt und dann in einen Strom von Trägergas eingeschaltet.

Die US-A-4 038 874 betrifft eine Vorrichtung zum Einbringen von Proben in eine chromatographische Trennsäule mittels einer auf einem Schlitten angeordneten Spritze.

Die DE-A1-35 09 764 betrifft ein Schieberventil zum wahlweisen Verbinden von Leitungen.

Die CH-A-533 264 zeigt ein von einem Schrittmotor gesteuertes Probeentnahmeventil zur wahlweisen Verbindung jeder einer Mehrzahl von Probeentnahmestellen mit einer einzelnen Prüfstelle.

Die DE-B2-25 07 260 beschreibt ein Verfahren zur Probenaufgabe bei der flammenlosen Atomabsorptions-Spektroskopie, bei welchem eine Probenflüssigkeit aus einem Probenbehälter in einen Graphitofen zur elektrothermischen Atomisierung der Probe überführt wird. Bei dem dort beschriebenen Verfahren werden verschiedene Proben nacheinander mittels eines Dosierrohres aus Probenbehältern angesaugt. Das Dosierrohr wird jeweils anschließend zu dem Graphitofen bewegt und die angesaugte Probe wird in diesen Graphitofen abgegeben. Zwischen den Ansaug- und Abgabezyklen verschiedener Proben ist jeweils ein Spülvorgang eingeschaltet. Zu diesem Spülvorgang wird Spülflüssigkeit von der dem Ansaugende abgewandten Seite her in das Dosierrohr geleitet und durch dieses Dosierrohr in ein Spülgefäß abgegeben. Nach dem Spülvorgang ist das Innere des Dosierrohres mit Spülflüssigkeit gefüllt. Nach dem Spülvorgang und vor dem Ansaugen der Probe wird ein kleines Luftvolumen in das Dosierrohr angesaugt. Nach dem Abgeben der Probe in den Graphitofen wird dieses Luftvolumen zusammen mit einem Probenvolumen wieder aus dem Dosierrohr herausgedrückt. Zum Ansaugen des Luftvolumens und zum Ansaugen des Probenvolumens sind bei der bekannten Anordnung je eine Luft- bzw. Probenpumpe vorgesehen. Weiterhin ist mit dem Dosierrohr eine über Rückschlagventile nur in einer Richtung fördernde Spülflüssigkeitspumpe verbunden, die Spülflüssigkeit aus einem Spülflüssigkeitsbehälter ansaugt.

Eine spezielle Konstruktion einer solchen Spülflüssigkeitspumpe zeigt die DE-C2-36 03 632.

Die DE-C2-31 25 321 zeigt eine Stechkanüle zur Entnahme von flüssiger Probe aus Probengefäßen, die durch eine selbstdichtende Membran verschlossen sind. Diese Stechkanüle besteht aus einem kapillaren Rohr, das an seinem Ende auch innen konisch verjüngt ist.

Die DE-A1-37 20 289 beschreibt ein Verfahren zur elektrothermischen Atomisierung von Proben, bei welchem die Probe über eine Dosierschleife von einer Trägerflüssigkeit durch eine beheizte Kapillare gedrückt wird, wobei Probe an der Wandung eines vorgeheizten Graphitofens niedergeschlagen wird. Die so niedergeschlagene Probe wird dann durch Atomabsorptions-Spektroskopie untersucht.

Die US-A-4 189 943 zeigt ein Gerät zum Abmessen von Flüssigkeiten.

### Offenbarung der Erfindung

Der Erfindung liegt die Aufgabe zugrunde, eine Dosiereinrichtung der eingangs genannten Art so auszubilden, daß eine sichere Abdichtung zwischen der Dosiernadel und dem Probeneinlaß gewährleistet ist.

Erfindungsgemäß wird diese Aufgabe dadurch gelöst, daß
(e) die Dosiernadel an ihrem vorderen Ende eine sich zum Ende hin verjüngende Dichtfläche bildet und
(f) der Probeneinlaßkanal in dem Dichtkörper des Umschaltventils einen geraden ersten Abschnitt größeren Querschnitts aufweist, in welchen das vordere ende der Dosiernadel einführbar ist, sowie
   - einen damit in Verbindung stehenden zweiten Abschnitt geringeren Querschnitts der in der Steuerfläche zwichen Dichtkörper und stillstehendem Teil mündet und
   - eine Ringschulter zwischen dem ersten und dem zweiten Abschnitt, die komplementär zu der Dichtfläche der Dosiernadel ist.

Es ergibt sich somit eine kraftschlüssige Dichtung zwischen der Dichtfläche der Dosiernadel und der Ringschulter. Dadurch kann in der Praxis keine Probenflüssigkeit in die Nadelführung gelangen. Damit wird die Gefahr einer Verschleppung wesentlich reduziert. Die Dichtung unterliegt praktisch keinem Verschleiß. Auch die Dichtfläche des Stators wird durch die Dosiernadel nicht beeinträchtigt.

In dem beweglichen Teil des Umschaltventils kann eine Nadelführung mit einem Führungskanal für die Dosiernadel vorgesehen sein, wobei sich der Führungskanal an dem äußeren Ende trichterförmig erweitert. Das erleichtert die Einführung der Dosiernadel in den Probeneinlaß.

Die Dosiernadel kann an einem Zahnstangenkörper angebracht sein, der verschiebbar in einem Träger geführt und mit einer längs verlaufenden Zahnleiste versehen ist. Die Zahnleiste ist dabei in Eingriff mit einem Ritzel, das durch einen Stellmotor antreibbar ist. Der Stellmotor kann ein Schrittmotor sein. Der Zahnstangenkörper ist vorzugsweise hülsenförmig. In dem hülsenförmigen Zahnstangenkörper ist ein Nadelträger geführt. Die Dosiernadel erstreckt sich in Längsrichtung durch den Nadelträger. Die Dosiernadel ist in dem Nadelträger so gehaltert, daß sie an einem ersten Ende des Nadelträgers aus diesem herausragt. Der Nadelträger liegt an seinem ersten Ende an einem Anschlag an. Eine an dem Zahnstangenkörper abgestützte, vorgespannte Feder liegt an dem gegenüberliegenden zweiten Ende des Nadelträgers an.

Auf diese Weise hat die Nadel zunächst eine definierte Lage relativ zu dem Zahnstangenkörper, die durch den Anschlag bestimmt ist. Wenn die Dosiernadel an der Ringschulter in dem Dichtkörper zur Anlage kommt, wird die Feder bei einer Weiterbewegung des Zahnstangenkörpers zusammengedrückt. Es ergibt sich dann eine definierte Andruckkraft der Dichtfläche der Dosiernadel an der Ringschulter. In der Praxis wird durch den Schrittmotor zunächst die Dosiernadel jeweils um eine bestimmte Anzahl von Schritten in den Probeneinlaß abgesenkt. Dabei kommt die Dosiernadel noch nicht mit der Ringschulter in Berührung. Daraufhin erfolgt eine weitere Absenkung um beispielsweise jeweils zehn Schritte. Nach jedem solchen Absenken wird die Stromversorung des Schrittmotors abgeschaltet. Bei Berührung der Ringschulter durch die Dosiernadel bewegt sich der Schrittmotor nach dem Abschalten der Stromversorung durch den mechanischen Druck rückwärts und bleibt dann stehen. Daraufhin wird die Dosiernadel in die Ausgangsposition zurückgefahren. Die hierzu benötigten Schritte werden gezählt. Die Dosiernadel wird dann bei jeder Dosierung um die so gemessene Schrittzahl zuzüglich einer festen Schrittzahl von beispielsweise 40 in den Probeneinlaß vorgefahren. Es ist dann sichergestellt, daß die Dosiernadel mit einer definierten Dichtkraft an der Ringschulter anliegt.

An dem Träger kann ein Flaschenniederhalter parallel zu dem Zahnstangenkörper verschiebbar geführt sein. Der Flaschenniederhalter ist von einer Feder in Vorschubrichtung des Zahnstangenkörpers vorbelastet. An dem Zahnstangenkörper ist ein Mitnehmer vorgesehen, an welchem der Flaschenniederhalter unter dem Einfluß der Feder anliegt. Der Flaschenniederhalter bewegt sich mit dem Zahnstangenkörper und der Dosiernadel nach unten solange, bis der Flaschenniederhalter an einem als Probengefäß dienenden Probenfläschen zur Anlage kommt. Wenn sich die Dosiernadel mit dem Nadelträger weiter nach unten in das Probenfläschen hineinbewegt, hebt der Flaschenniederhalter von dem Mitnehmer ab. Bei einer Rückwärtsbewegung der Dosiernadel verhindert der Flaschenniederhalter ein Mitnehmen des Probenfläschens durch die Dosiernadel solange, bis die Dosiernadel das Septum des Probenfläschchens verlassen hat. Dann nimmt der Mitnehmer den Flaschenniederhalter wieder mit.

An dem Flaschenniederhalter ist ein Betätigungsglied vorgesehen, welches einen Schaltvorgang aus löst, wenn der Flaschenniederhalter mit dem Zahnstangenkörper weiter als bis zur Höhe üblicher Probengefäße mitgenommen wird.

Der bewegliche Teil des Umschaltventils kann ein gegenüber dem stillstehenden Teil (Stator) verdrehbarer Rotor sein. Die erste und die zweite Stellung des Rotors sind durch zwei Anschläge bestimmt. Die Umschaltung erfolgt durch einen Drehantrieb, dessen Achse parallel zu der Achse des Rotors ist. Der Drehantrieb ist mit dem Rotor über ein Gestänge verbunden. Der Drehantrieb ist jeweils bei Erreichen eines der Anschläge abschaltbar. In dem Gestänge sind Federglieder vorgesehen. Zweckmäßigerweise weist das Gestänge einen mit dem Drehantrieb verbundenen ersten Schwenkhebel auf, der an seinem Ende einen Kulissenstein trägt. Das Gestänge weist weiterhin einen mit dem Rotor verbundenen zweiten Schwenkhebel auf. Der erste und der zweite Schwenkhebel sind durch einen Lenker verbunden. Der Kulissenstein ist an dem Lenker verschiebbar geführt und zwischen zwei gegeneinander Federn gehalten.

Auf diese Weise braucht zwischen dem Antrieb und dem Umschaltventil nicht wie bei üblichen Dosiereinrichtungen dieser Art, eine Rutschkupplung vorgesehen zu werden. Die Gestängekonstruktion ist wesentlich preisgünstiger. Außerdem wird die Genauigkeit der Einstellung des Umschaltventils verbessert.

In weiterer Ausbildung der Erfindung kann die Probenpumpe als einzige Pumpe über ein Schaltventil wahlweise mit einem Behälter mit Trägerflüssigkeit oder mit der Dosiernadel verbindbar sein. Auf diese Weise wird eine Pumpe eingespart. Probleme, wie sie mit Spülpumpen auftreten (vgl. DE-C2-36 03 632), werden vermieden.

Zur Verbesserung der Reproduzierbarkeit der Dosierung hat es sich als vorteilhaft erwiesen, wenn ein Verbindungskanal des beweglichen Teiles des Umschaltventils sich über einen solchen Winkel erstreckt, daß er beim Umschalten aus der zweiten in die erste Stellung eine Verbindung zwischen dem besagten anderen Ende der Dosierschleife und dem Abfallanschluß hergestellt ist, bevor eine Verbindung zwischen dem Probeneinlaß und dem besagten einen Ende der Dosierschleife hergestellt wird. Dann kann sich der Druck in der Dosierschleife ausgleichen, bevor die Verbindung zur Dosiernadel hergestellt wird, so daß keine Trägerflüssigkeit unter Druck in die Dosiernadel eindringen und das dosierte Volumen der Probenflüssigkeit verfälschen kann.

Das kann in der weise bewerkstelligt werden, daß der stillstehende Teil des Umschaltventils sechs um jeweils 60° gegeneinander winkelversetzte Anschlüsse aufweist, von denen ein erster Anschluß mit dem besagten einen Ende der Dosierschleife verbunden ist, ein zweiter Anschluß mit einem Abfallanschluß verbunden ist, ein dritter Anschluß mit dem Anfallanschluß verbunden ist, ein vierter Anschluß mit dem anderen Ende der Dosierschleife verbunden ist, ein fünfter Anschluß mit dem Tägerflüssigkeitsanschluß verbunden ist und ein sechster Anschluß mit einem Analysengeräteanschluß verbunden ist, der bewegliche Teil zwei Verbindungskanäle aufweist, von denen ein erster Verbindungskanal sich über etwa 60° erstreckt und ein zweiter Verbindungskanal gegenüber dem ersten Verbindungskanal in einem Winkelabstand von etwa 60° von dem ersten Verbindungskanal vorgesehen ist und sich über wesentlich mehr als 60° erstreckt, und der Probeneinlaß in einem Winkelabstand von 60° von dem ersten Verbindungskanal in entgegengesetzter Richtung angeordnet ist.

Ein Ausführungsbeispiel der Erfindung wird nachstehend unter Bezugnahme auf die zugehörigen Zeichnungen näher erläutert.

### Kurze Beschreibung der Zeichnungen

- Fig. 1: zeigt schematisch eine Dosiereinrichtung für die Flüssig-Chromatographie mit einer Stellung eines Schaltventils, in welcher eine Probenpumpe Trägerflüssigkeit ansaugt.
- Fig. 2: zeigt die Dosiereinrichtung von Fig. 1 in der zweiten Stellung des Schaltventils, in welcher die Probenpumpe mit einer Dosiernadel verbunden ist.
- Fig. 3: zeigt ein Umschaltventil bei der Dosiereinrichtung von Fig. 1 in einer ersten Stellung.
- Fig. 4: zeigt das Umschaltventil in einer zweiten Stellung.
- Fig. 5: zeigt einen Längsschnitt durch das Umschaltventil.
- Fig. 6: zeigt eine Einzelheit des Umschaltventils von Fig. 5 mit eingeführter Dosiernadel.
- Fig. 7: zeigt den Stellmechanismus für die Dosiernadel.
- Fig. 8: zeigt eine Einzelheit von Fig. 7.
- Fig. 9: zeigt den Antrieb des Umschaltventils bei der Dosiereinrichtung von Fig. 1.

### Bevorzugte Ausführung der Erfindung

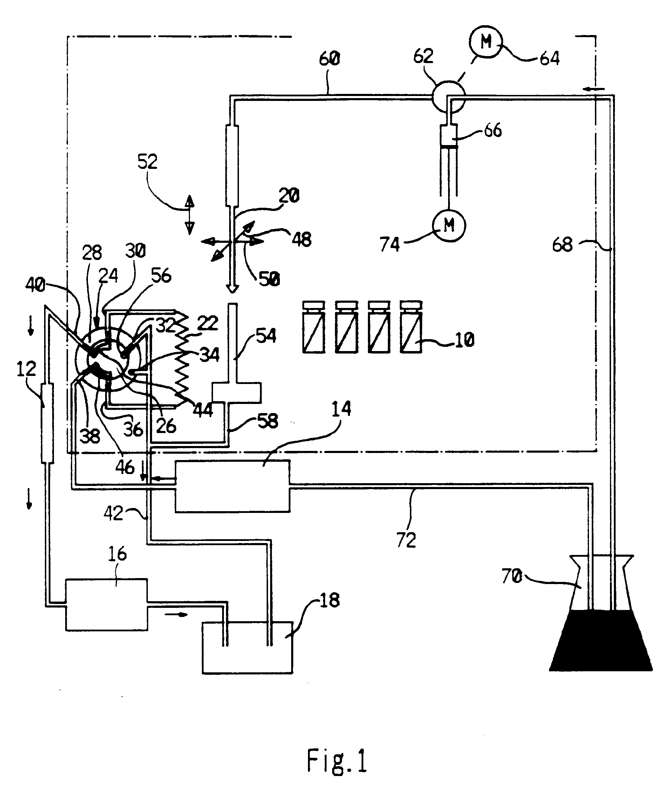

Die Dosiereinrichtung nach Fig. 1 dient dazu, Probenflüssigkeit aus Probengefäßen 10 auf den Eingang einer Trennsäule 12 für die Flüssig-Chromatographie zu leiten. Die Probenflüssigkeit wird dann von einer Trägerflüssigkeit, welche von einer Pumpe 14 gefördert wird, durch die Trennsäule 12 transportiert. Die am Ausgang der Trennsäule 12 austretenden Substanzen werden in bekannter Weise von einem Detektor 16 erfaßt. Der Ausgang des Detektors 16 ist mit einem Abfallgefäß 18 verbunden. Die Probengefäße 10 sind Probenfläschen, die durch ein Septum verschlossen sind. Die Probenfläschchen sind in üblicher Weise in einem Magazin angeordnet. Zum Überführen einer definierten Menge von Probenflüssigkeit in den Eingang der Trennsäule 12 sind eine Dosiernadel 20, eine Probenschleife 22 und ein Umschaltventil 24 vorgesehen.

Das Umschaltventil 24 enthält einen Rotor 26 und einen Stator 28. Der Stator 28 hat sechs Anschlüsse 30, 32, 34, 36, 38 und 40. Der Anschluß 30 ist mit einem ersten Ende der Dosierschleife 22 verbunden. Die Anschlüsse 32 und 34 sind parallel über eine Leitung 42 mißt dem Abfallgefäß 18 verbunden. Der Anschluß 36 ist mit dem zweiten Ende der Dosierschleife 22 verbunden. Der Anschluß 38 ist mit der Auslaßseite der Pumpe 14 verbunden. Der Anschluß 40 ist mit dem Einlaß der Trennsäule 12 verbunden. Die Anschlüsse des Stators 28 sind jeweils um 60° gegeneinander winkelversetzt. Der Rotor 26 weist zwei Verbindungskanäle 44 und 46 auf. Die beiden Verbindungskanäle sind 60° voneinander getrennt. Der Verbindungskanal 44 erstreckt sich über einen Winkel von 60°. Der Verbindungkanal 46 erstreckt sich über einen Winkel von wesentlich mehr als 60°, nämlich über einen Winkel von 90°. Durch die Verbindungskanäle 44 und 46 ist somit jeweils eine Verbindung zwischen benachbarten Anschlüssen des Stators 28 herstellbar.

Die Dosiernadel 20 ist mit einem Träger in zwei Koordinaten beweglich, wie durch die Doppelpfeile 48 und 50 angedeutet ist. Sie kann außerdem gegenüber dem Träger in vertikaler Richtung abgesenkt und angehoben werden, wie durch den Doppelpfeil 52 angedeutet ist.

Mit dem Träger ist die Dosiernadel 20 wahlweise über eine programmierte Magazinposition und damit über ein Probengefäß 10, über ein Spülgefäß 54 oder über einen am Rotor 26 des Umschaltventils 24 vorgesehenen Probeneinlaß 56 bewegbar. Das Spülgefäß 54 ist als Überlaufgefäß ausgeführt und über eine Leitung 58 mit der zum Abfallgefäß 18 führenden Leitung 42 verbunden.

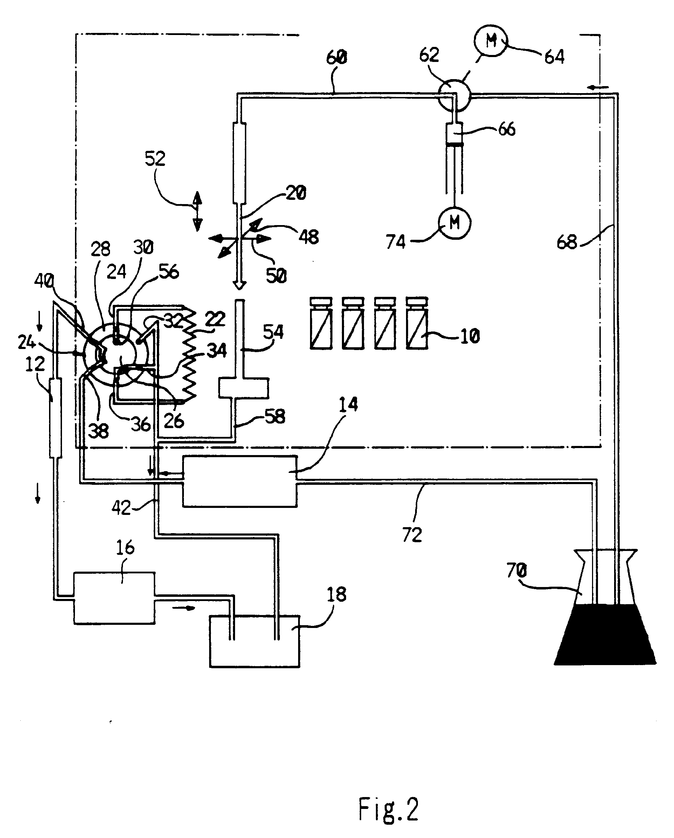

Die Dosiernadel 20 ist über eine Kapillare 60 mit einem Schaltventil 62 verbunden. Das Schaltventil 62 ist von einem Stellmotor 64 zwischen zwei Schaltstellungen umschaltbar. In der in Fig. 1 dargestellten Schaltstellung verbindet das Schaltventil 62 eine Probenpumpe 66 mit einer Leitung 68, die zu einem Trägerflüssigkeitsgefäß 70 geführt ist. Das Trägerflüssigkeitsgefäß 70 ist über eine Leitung 72 auch mit dem Einlaß der Pumpe 14 verbunden. Die Probenpumpe 66 ist durch einen Motor 74 antreibbar. Der Antrieb erfolgt dabei so, daß der Kolben der Probenpumpe 66 einen genau definierten Hub ausführt. In einer zweiten Schaltstellung, die in Fig. 2 dargestellt ist, ist über das Schaltventil 62 eine Verbindung zwischen der Probenpumpe 66 und der Kapillare 60 und damit der Dosiernadel 20 hergestellt.

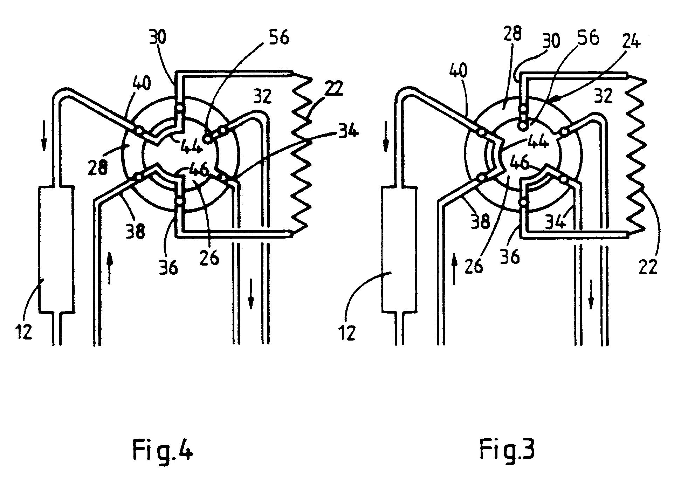

In Fig. 2 ist das Umschaltventil 24 in seiner ersten Stellung dargestellt. In Fig. 1 steht das Umschaltventil 24 in seiner zweiten Stellung. Die beiden Stellungen des Umschaltventils sind in Fig. 3 und Fig. 4 noch einmal vergrößert dargestellt.

In der in Fig. 3 dargestellten ersten Stellung des Umschaltventils 24 ist über den Verbindungskanal 44 eine Verbindung zwischen den Anschlüssen 38 und 40 hergestellt. Die von der Pumpe 14 gelieferte Trägerflüssigkeit strömt dann über Anschluß 38, Kanal 44 und Anschluß 40 zum Einlaß der Trennsäule 12. Der Probeneinlaß 56 ist in der ersten Stellung des Umschaltventils 24 mit dem Anschluß 30 und damit mit dem einen Ende der Dosierschleife 22 verbunden. Das andere Ende der Dosierschleife 22 ist über den Anschluß 36, den Verbindungskanal 46 und den Anschluß 34 mit dem Abfallgefäß 18 verbunden.

In der zweiten Stellung (Fig. 4) des Umschaltventils 24 ist der Anschluß 38 über den Verbindungskanal 46 mit dem Anschluß 36 und der Anschluß 30 über den Verbindungskanal 44 mit dem Anschluß 40 verbunden. Wie aus Fig. 4 ersichtlich ist, ist bei dieser Stellung die Dosierschleife 22 mit der Trennsäule 12 in Reihe geschaltet. Ein Strom von Trägerflüssigkeit von der Pumpe 14 fließt über den Anschluß 38, den Verbindungskanal 46 und den Anschluß 36 zu der Dosierschleife 22 und vom anderen Ende der Dosierschleife 22 über den Anschluß 30, den Verbindungskanal 44 und den Anschluß 40 zum Einlaß der Trennsäule 12.

Die beschriebene Anordnung arbeitet wie folgt:

Bei der in Fig. 1 dargestellten Stellung des Schaltventils 62 wird durch die Probenpumpe 66 Trägerflüssigkeit aus dem Trägerflüssigkeitsbehälter 70 über Leitung 68 angesaugt.

Nach Umschalten des Schaltventils 62 (Fig. 2) wird diese Trägerflüssigkeit, die hier als Waschflüssigkeit dient, über die Kapillare 60 und die Dosiernadel 20 in das Spülgefäß 54 abgegeben. Die Dosiernadel 20 ist jetzt bis zur Spitze mit Trägerflüssigkeit gefüllt. Es wird dann über die Probenpumpe 66 ein kleines Luftvolumen angesaugt, welches Probenflüssigkeit und Trägerflüssigkeit in der Dosiernadel 20 trennen soll. Die Probenpumpe 66 saugt reine Trägerflüssigkeit an, die dabei über das Schaltventil 62 aus der Dosiernadel 20 und der Kapillare 60 angesaugte Trägerflüssigkeit bewirkt ein Einsaugen in die Dosiernadel 20. Die Dosiernadel 20 wird dann mit ihrem Träger über ein Probengefäß 10, also ein Probenfläschchen, bewegt. Die Dosiernadel 20 wird abgesenkt und durchsticht das Septum des Probenfläschchens. Die Probenpumpe saugt über das Schaltventil 62 ein weiteres Volumen von Trägerflüssigkeit aus der Dosiernadel 20 an, wodurch Probenflüssigkeit aus dem Probenfläschchen in die Dosiernadel 20 eingesaugt wird. Die Dosiernadel 20 wird dann wieder angehoben und aus dem Probenfläschchen herausgezogen.

Als nächster Schritt wird die Dosiernadel über den Probeneinlaß 56 bewegt. Das Umschaltventil 24 ist in Fig. 2 in seiner ersten Stellung. Der Probeneinlaß 56 des Rotors 26 ist mit dem Anschluß 30 des Stators verbunden. Der Anschluß 30 ist mit einem Ende der Dosierschleife 22 verbunden. Das andere Ende der Dosierschleife 22 ist über Anschluß 36, Verbindungskanal 46 und Anschluß 34 mit dem Abfallgefäß verbunden. Die Probenpumpe 66 macht jetzt einen Ausschubhub und drückt dadurch Probenflüssigkeit in den Probeneinlaß und in die Probenschleife 22. Die in der Probenschleife 22 noch vorhandene Trägerflüssigkeit wird verdrängt und strömt zu dem Abfallgefäß 18.

Es erfolgt nun eine Umschaltung des Umschaltventils 24 in die zweite Stellung, die in Fig. 4 dargestellt ist. Bei dieser Umschaltung bleibt die Dosiernadel 20 in dem Probeneinlaß 56. Die Dosiernadel 20 macht also die Drehbewegung des Rotors 26 mit. In der zweiten Stellung des Umschaltventils 24 wird die in die Probenschleife 22 eingebrachte Probenflüssigkeit von dem Trägerflüssigkeitsstrom in und durch die Trennsäule 12 transportiert.

Während dieses Vorganges kann die Probenpumpe 66 die restliche Probenflüssigkeit aus der Dosiernadel 20 sowie anschließend Trägerflüssigkeit zum Spülen des Probeneinlasses 56 in den Probeneinlaß drücken, wobei diese Flüssigkeiten dann über den Anschluß 32 des Umschaltventils 24 zum Abfallgefäß 18 abfließen. Die Dosiernadel 20 wird dann aus dem Probeneinlaß 56 herausgezogen und über das Spülgefäß 54 bewegt. Hier kann ggf. eine zusätzliche Spülung erfolgen. Das Schaltventil 62 schaltet dann wieder in die in Fig. 1 dargestellte Stellung um, in welcher die Probenpumpe 66 Trägerflüssigkeit aus dem Trägerflüssigkeitsbehälter 70 ansaugen kann.

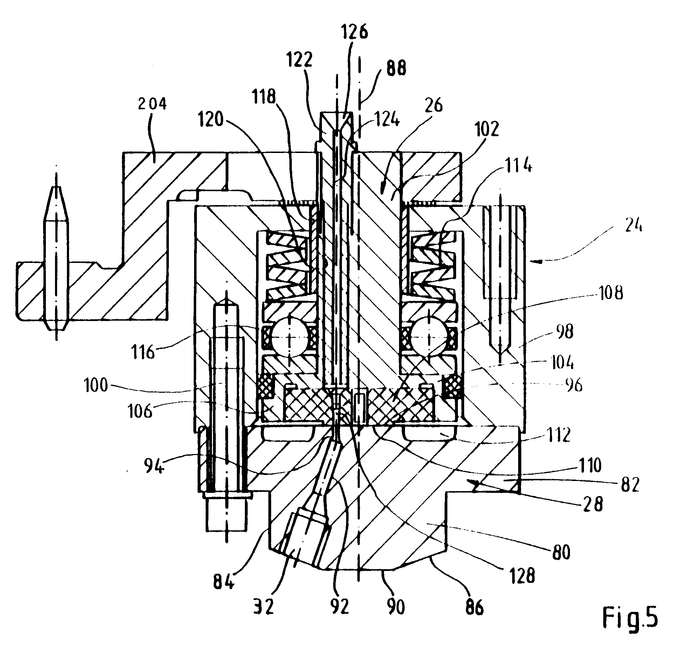

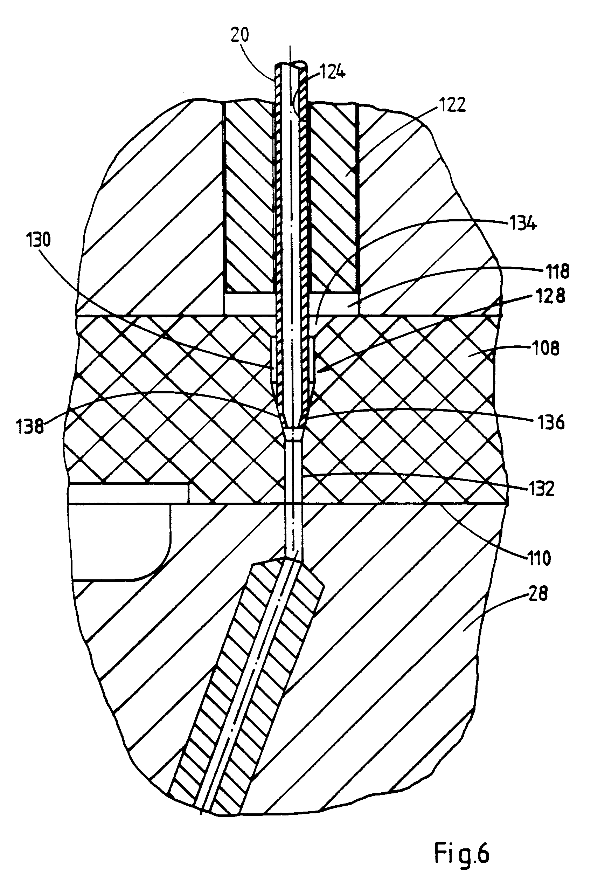

Die Konstruktion des Umschaltventils ist in Fig. 5 und 6 dargestellt.

Der Stator 28 des Umschaltventils 24 bildet ein Gehäuse, das den Rotor 26 umschließt. Der Stator 28 weist einen Kopfteil 80 auf, in welchem die Anschlüsse 30 bis 40 gebildet sind. In Fig. 5 ist nur der Anschluß 32 gezeichnet. Der Kopfteil 80 ist von einer Scheibe 82 mit einem zentralen Ansatz 84 gebildet. Die Stirnfläche des zentralen Ansatzes 84 bildet eine flach-konische Ringfläche 86, die eine plane, senkrecht zur Achse 88 des Stators verlaufende plane Fläche 90 umschließt. Die Anschlüsse, z. B. Anschluß 32, sind in der flach-konischen Ringfläche 86 vorgesehen. Die Anschlüsse gehen dann in schräg einwärts laufende Kanäle 92 über, die ihrerseits in enge, axiale Kanäle 94 übergehen, welche in einem Kranz um die Achse 88 herum in einer statorseitigen Steuerfläche 96 münden.

Mit dem Kopfteil 82 ist ein topfförmiger Gehäuseteil 98 durch Schrauben 100 verbunden. Der Gehäuseteil 98 umschließt den Rotor 26. Der Rotor 26 enthält einen Schaft 102. Der Schaft endet in einem Teller 104 mit einem Rand 106. In dem Teller 104 mit dem Rand 106 ist ein scheibenförmiger Dichtkörper 108( gehalten. Der Dichtkörper 108 weist in seinem Mittelbereich eine vorstehende Steuerfläche 110 auf, die an der Steuerfläche 96 des Stators 28 anliegt. Um die Steuerfläche 96 herum ist in dem Kopfteil 82 eine Ringnut 112 angebracht. Entsprechend ist auch der Rand 106 und der Dichtkörper 108 um die Steuerfläche 110 herum zurückgesetzt. Der Rotor 26 wird durch eine Tellerfeder 114, die sich an dem "Boden" des topfförmigen Gehäuseteils 98 abstützt, über ein Drucklager 116 gegen den Kopfteil 82 des Stators gedrückt.

Der Schaft 102 des Rotors 26 ist in einer Buchse 118 drehbar in dem Stator 28 gelagert und durch den "Boden" des topfförmigen Gehäuseteils 98 herausgeführt. Der Durchmesser des Schafts 102 entspricht etwa dem der Steuerfläche 110.

In dem Schaft 102 ist eine außermittige Bohrung 120 vorgesehen, in welche eine Nadelführung 122 eingeschraubt ist. Die Nadelführung 122 weist eine Längsbohrung 124 auf, die an ihrem äußeren, in Fig. 5 oberen Ende eine trichterförmige Erweiterung 126 bildet. Die Längsbohrung 124 fluchtet mit einem Probeneinlaßkanal 128 in dem Dichtkörper 108.

Der Probeneinlaßkanal ist in Fig. 6 deutlicher erkennbar. Der Probeneinlaßkanal 128 enthält eine geraden ersten Abschnitt 130, in welchen das vordere Ende der Dosiernadel 20, wie in Fig. 6 dargestellt, einführbar ist. Mit dem ersten Abschnitt 130 steht ein zweiter Abschnitt von geringerem Querschnitt in Verbindung. Der zweite Abschnitt 132 fluchtet mit dem ersten Abschnitt und mündet in der Steuerfläche 110 des Dichtkörpers 108. Der erste Abschnitt läuft auf der Seite der Bohrung 118 in eine trichterförmige Erweiterung 134 aus. Zwischen dem ersten Abschnitt 130 und dem zweiten Abschnitt 132 des Probeneinlaßkanals 128 ist eine konische Ringschulter 136 gebildet. Die Dosiernadel 20 bildet ihrerseits an ihrem vorderen Ende (unten in Fig. 6) eine sich zum Ende hin verjüngende, konische Dichtfläche 138. Die Dichtfläche 138 legt sich an die konische Ringschulter 136 abdichtend an.

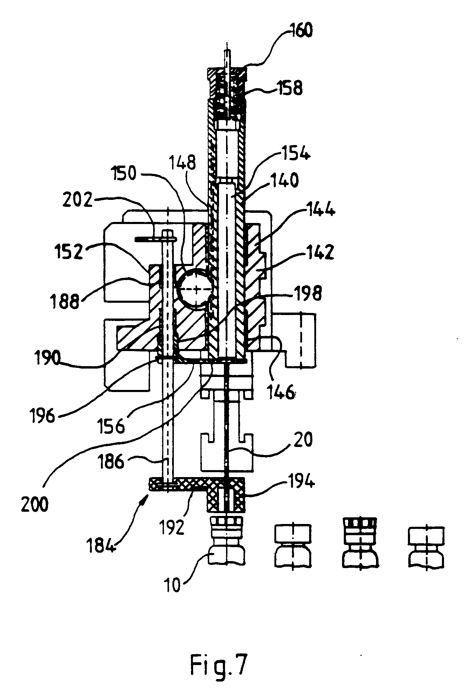

In Fig. 7 ist die Anordnung zum Auf- und Abbewegen der Dosiernadel 20 dargestellt. Ein Zahnstangenkörper 140 ist in einem Träger 142 in Buchsen 144 und 146 vertikal verschiebbar geführt. Der Zahnstangenkörper 140 ist hülsenartig ausgebildet. Auf einer Seite des Zahnstangenkörpers 140 ist eine Zahnleiste 148 angeformt. Die Zahnleiste 148 ist in Eingriff mit einem Ritzel 150, das von einem Schrittmotor 152 angetrieben wird. Über den Schrittmotor 152, das Ritzel 150 und die Zahnleiste 148 ist der Zahnstangenkörper 140 gegenüber dem Träger 142 kontrolliert vertikal verschiebbar. Der Schrittmotor 152 wird von einer (nicht dargestellten) Steuereinheit in bekannter Weise gesteuert.

In dem hülsenförmigen Zahnstangenkörper 140 ist ein Nadelträger 154 verschiebbar geführt. In dem Nadelträger sitzt die Dosiernadel 20. Die Dosiernadel 20 erstreckt sich in Längsrichtung durch den Nadelträger 154. Die Dosiernadel 20 ist an dem Nadelträger 154 so gehaltert, daß sie an dem unteren Ende des Nadelträgers 154 aus diesem heraus ragt. An dem unteren Ende des Zahnstangenkörpers 140 ist ein Anschlag 156 gebildet. Am oberen Ende des Nadelträgers 154 liegt an diesem eine Schraubenfeder 158 an. Die Schraubenfeder 158 ist vorgespannt und stützt sich an einer Kappe 160 ab, die in das obere Ende des hülsenförmigen Zahnstangenkörpers 140 eingeschraubt ist. Die Dosiernadel 20 kann daher unter Überwindung der Vorspannung der Feder 158 gegenüber dem Zahnstangenkörper 140 nach oben verschoben werden, wobei sich der Nadelträger 154 von den Anschlag 156 abhebt.

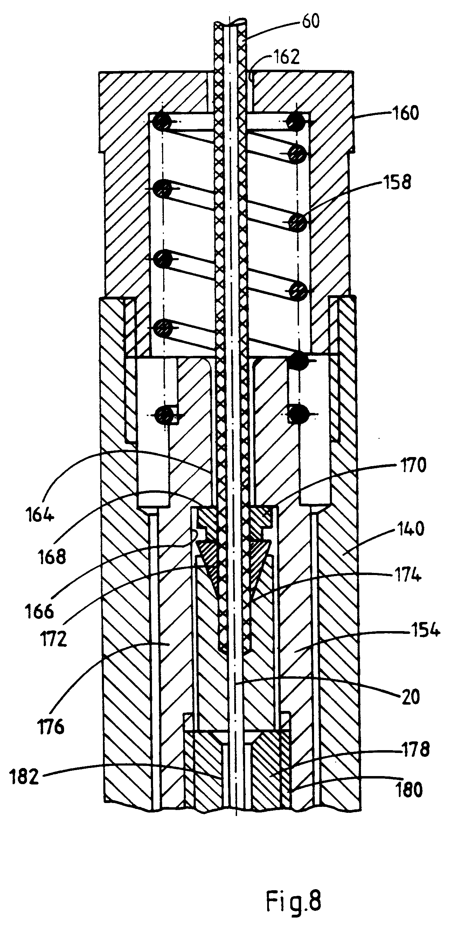

In Fig. 8 ist der obere Teil des Zahnstangenkörpers 140 mit der Kappe 160 und dem Nadelträger 154 in vergrößertem Maßstab dargestellt. Die Kapillare 60 ist durch einen Durchbruch 162 der Kappe 160 hindurchgeführt und auf das obere Ende der Dosiernadel 20 aufgeschoben. Die Kapillare erstreckt sich dabei in eine Längsbohrung 164 des Nadelträgers 154. Die Längsbohrung 164 geht in eine Längsbohrung 166 von größerem Durchmesser über. Zwischen den Längsbohrungen 164 und 166 ist eine Ringschulter 168 gebildet. An der Ringschulter 168 liegt ein ringförmiges Druckstück 170 an. Das Druckstück 170 umgibt die Kapillare 60 und die Dosiernadel 20. An dem Druckstück 170 liegt auf der Unterseite ein konischer Klemmkörper 172 an, der ebenfalls die Kapillare 60 und die Dosiernadel 20 umgibt. Der konische Klemmkörper 172 ragt in eine dazu im wesentlichen komplementäre, trichterförmige Ausnehmung 174 in der Stirnfläche eines Druckstücks 176 hinein. Das Druckstück 176 liegt an einem Gewindestück 178 an, welches in einer Gewindebohrung 180 geführt ist. Die Gewindebohrung 180 schließt sich an die Längsbohrung 166 an. Das Gewindestück 178 weist eine Längsbohrung 182 auf, durch welche die Dosiernadel 20 hindurchgeführt ist. Durch Festziehen des Gewindestückes 178 gegen das Druckstück 176 und über das Klemmstück 172 und das Druckstück 170 gegen die Ringschulter 168 wird das Klemmstück 172 radial zusammengedrückt, wodurch die Kapillare 60 sicher auf der Dosiernadel 20 festgeklemmt wird.

An dem Träger 142 ist ein Flaschenniederhalter 184 vertikal verschiebbar geführt. Der Flaschenniederhalter 184 enthält eine Stange 186, die in Buchsen 188 und 190 in einer Bohrung des Trägers 142 geführt ist. Am unteren Ende der Stange 186 sitzt ein Arm 192, der mit einem Kopf 194 auf ein als Probengefäß 10 dienendes Probenfläschen aufsetzbar ist.

Auf der Stange 186 sitzt ein Ring 196. An dem Ring liegt eine Schraubenfeder 198 an. Die Schraubenfeder sitzt in einer Erweiterung der Führungsbohrung für die Stange 86 und ist an dem Träger 142 abgestützt. Die Feder 198 sucht die Stange 186 und damit den Arm 192 und Kopf 194 nach unten zu drücken. Der Ring 196 liegt jedoch an einem Mitnehmer 200 an, der mit dem Zahnstangenkörper 140 verbunden ist. Dadurch wird der Flaschenniederhalter 184 zunächst in einer festen Lage zu dem Zahnstangenkörper 140 gehalten.

Wenn sich der Zahnstangenkörper 140 mit der Dosiernadel 20 nach unten bewegt, folgt der Flaschenniederhalter 184 nach, bis der Kopf 194 auf dem Probenfläschchen aufsitzt. Wie aus Fig. 7 ersichtlich ist, liegt die untere Spitze der Dosiernadel 20 etwa in der Ebene der unteren Stirnfläche des Kopfes 194. Wenn sich der Zahnstangenkörper 140 weiter nach unten bewegt, dringt die Dosiernadel 20 durch das Septum des Probenfläschchens hindurch in das Probenfläschchen ein. Der Flaschenniederhalter 184 kann dieser Bewegung nicht folgen. Der Mitnehmer 200 löst sich von dem Ring 196. Wenn sich der Zahnstangenkörper 140 mit der Dosiernadel 20 nach Ansaugen der Probenflüssigkeit wieder nach oben bewegt, wobei die Dosiernadel 20 aus dem Septum herausgezogen wird, dann verhindert der Flaschenniederhalter, daß das Probenfläschchen durch die Reibung zwischen Dosiernadel 20 und Septum mit hochgehoben wird und schließlich auf das Magazin zurückfällt. Bei einem solchen Zurückfallen besteht nämlich die Gefahr, daß Probenflüssigkeit verspritzt. Wenn die Dosiernadel schließlich vollständig aus dem Septum des Probenfläschchens herausgezogen ist, wie dies in Fig. 7 dargestellt ist, dann kommt der Mitnehmer 200 wieder an dem Ring 196 zur Anlage und nimmt den Flaschgenniederhalter 184 wieder nach oben mit.

Am oberen Ende der Stange 186 ist ein Arm 202 angebracht. Dieser Arm 202 wirkt mit einem (nicht dargestellten) Mikroschalter zusammen als "Flaschensensor". Wenn in einer Magazinposition kein Probenfläschchen steht, dann wird der Flaschenniederhalter 184 nicht von diesem Probenfläschchen zurückgehalten sondern bewegt sich mit der Dosiernadel 20 weiter nach unten über die in Fig. 7 gezeigte Stellung hinaus. Der Arm 202 betätigt dann den Mikroschalter und signalisiert, daß sich an dieser Stelle kein Probenfläschchen befindet.

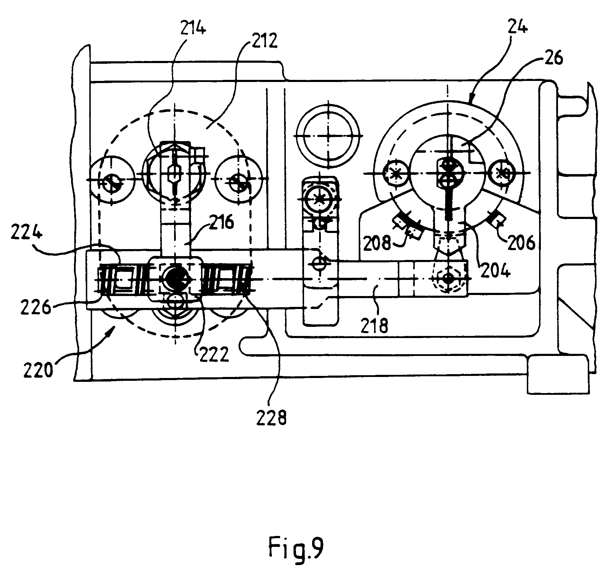

Fig. 9 ist eine Draufsicht und zeigt das Umschaltventil 24 und den zugehörigen Antrieb. An dem Rotor 26 des Umschaltventils 24 sitzt ein Schwenkhebel 204. Wie aus Fig. 5 ersichtlich ist, ist der Schwenkhebel 204 Z-förmig nach unten abgewinkelt. Der parallel zur Achse 88 verlaufende Mittelteil des Schwenkhebels 204 bewegt sich längs der Mantelfläche des Umschaltventils 24. Auf dieser Mantelfläche sitzen zwei Anschläge 206 und 208. Diese Anschläge 206 und 208 bestimmen die erste bzw. zweite Stellung des Umschaltventils 24. Mit 212 ist ein Drehantrieb in Form eines Motors bezeichnet. Auf der Achse 214 des Motors 212 sitzt ein Schwenkhebel 216. Der Schwenkhebel 216 ist mit dem Schwenkhebel 204 über einen Lenker 218 verbunden. Die Schwenkhebel 204 und 216 und der Lenker 218 bilden ein Gestänge 220. Am Ende des Schwenkhebels 216 sitzt ein Kulissenstein 222. Der Kulissenstein 222 ist in einer Führung 224 in Längsrichtung des Lenkers 218 verschiebbar geführt. Der Kulissenstein 222 wird jedoch zwischen zwei Schraubenfedern 226 und 228 gehalten.

Durch den Stellmotor 212 ist das Umschaltventil 24 zwischen der ersten und der zweiten Stellung umschaltbar. Der Stellmotor 212 bewegt beispielsweise den Schwenkhebel 204 solange, bis er an dem Anschlag 208 zur Anlage kommt. Der Anschlag 208 wirkt gleichzeitig als Endabschalter für den Stellmotor 212. Durch einen gewissen Nachlauf des Stellmotors 212 wird die Feder 228 noch etwas weiter zusammengedrückt. Nach dem Stillstand des Stellmotors 212 entspannt sich die Feder 228 teilweise. Die Restspannung der Feder 228 drückt den Schwenkhebel 204 über den Lenker 218 prellfrei an den Anschlag 208.

In gleicher Weise erfolgt die Umschaltung auf die zweite Stellung, in welcher der Schwenkhebel 204 an dem Anschlag 208 zur Anlage kommt. Die beschriebene Art der Umschaltung gewährleistet eine genau definierte Stellung des Rotors 26 in den beiden Stellungen des Umschaltventils 24.

Das Umschaltventil und die Dosiernadel wirken wie folgt zusammen:

Der Rotor 26 des Umschaltventils 24 wird von dem Stellmotor 212 in die in Fig. 3 dargestellte erste Stellung gebracht. Dabei liegt der Schwenkhebel 204 an dem Anschlag 208 an. Die Dosiernadel 20 wird mit dem Träger 142 durch bekannte, hier nicht dargestellte Mittel über den Probeneinlaß 56 bewegt, der in der ersten Stellung des Umschaltventils 24 in der Ebene des Anschlusses 30 steht. Der Probeneinlaß enthält die Probenführung 122 und den Probeneinlaßkanal 128. Der Probeneinlaßkanal 128 steht dann mit dem Anschluß 30 in Verbindung, so wie das in Fig. 5 für Anschluß 32 dargestellt ist. Der Schrittmotor 152 bewegt über das Ritzel 150 und die Zahnleiste 148 den Zahnstangenkörper 140 mit der Dosiernadel 20 nach unten. Die Dosiernadel 20 wird dabei durch die Nadelführung 122 in den Probeneinlaßkanal 128 eingeführt. Der Schrittmotor 152 bewegt dann die Dosiernadel 20 in Abschnitten von jeweils zehn Schritten vorwärts. Nach jeweils zehn Schritten wird die Stromversorgung des Schrittmotors 152 kurzzeitig abgeschaltet. Wenn die Dosiernadel 20 auf der konischen Ringschulter 136 zum Aufsitzen kommt, wird bei weiteren Schritten des Schrittmotors 152 die Feder 158 etwas zusammengedrückt. Nach Abschalten der Stromversorgung für den Schrittmotor 152 wird der Zahnstangenkörper 140 von der Federkraft zurückgedrückt und der Schrittmotor 152 etwas zurückgedreht. Dieser Vorgang wird erfaßt und zeigt an, daß die Dosiernadel 20 auf der Ringschulter 136 aufsitzt.

Beim anschließenden Herausziehen der Dosiernadel 20 aus dem Probeneinlaß 56 in ihre angehobene Ausgangsstellung werden die dazu erforderlichen Schritte des Schrittmotors 152 gezählt. Bei dem daran anschließenden Wiedereinführen der Dosiernadel 20 in den Probeneinlaß 56 für die folgenden Dosiervorgänge wird die Dosiernadel 20 um die so ermittelte Anzahl von Schritten durch den Schrittmotor 152 vorbewegt und zusätzlich um weitere vierzig Schritte. Diese weiteren vierzig Schritte bewirken eine Spannung der Feder 158 und gewährleisten, daß die konische Dichtfläche 138 der Dosiernadel 20 mit einer definierten Dichtkraft auf der konischen Ringschulter 136 des Dichtkörpers 108 aufsitzt. Es erfolgt so eine kraftschlüssige Dichtung zwischen Dosiernadel 20 und Dichtkörper 108. Die Dichtung ist praktisch verschleißfrei. Durch die Vorspannung der Feder 158 ist stets eine ausreichende Andruckkraft gewährleistet.

Dadurch, daß der zweite Verbindungskanal 46 sich über einen größeren Winkel als 60°, nämlich etwa 90°, erstreckt, wird bei der Umschaltung von der zweiten Stellung des Umschaltventils 24 (Fig.4) in die erste Stellung (Fig.3) zunächst eine Verbindung des in Fig.4 unteren Endes der Dosierschleife 22 über Anschluß 36, Verbindungskanal 46 und Anschluß 34 mit dem Abfallanschluß (Fig.1 und 2) hergestellt, bevor der Probeneinlaß 56 den Anschluß 30 erreicht. Es wird daher erst die Trägerflüssigkeit (Eluent) in der Dosierschleife 22 entspannt, bevor eine Verbindung zwischen der Dosierschleife 22 und der Dosiernadel 20 hergestellt wird Daher kann keine unter Druck stehende Trägerflüssigkeit auf die Dosiernadel "zurückschlagen" und so durch die in die Spitze der Dosiernadel eindringende Trägerflüssigkeit die Probenmenge verfälschen. Es hat sich gezeigt, daß mit einem in der beschriebenen Weise ausgebildeten Umschaltventil 24 eine wesentlich bessere Reproduzierbarkeit erreichbar ist als mit einer im übrigen gleichen Anordnung, bei welcher sich beide Verbindungskanäle 44 und 46 über jeweils 60° erstrecken.

## Patentansprüche

1. Dosiereinrichtung für Analysengeräte, insbesondere für die Flüssig-Chromatographie, enthaltend
a) eine Dosierschleife (22),
b) ein Umschaltventil (24) mit einem stillstehenden Teil (28) und einem gegenüber dem stillstehenden Teil (28) zwischen einer ersten und einer zweiten Stellung beweglichen Teil (26), der einen Probeneinlaß (56) aufweist und der mit einem Dichtkörper (108) an dem stillstehenden Teil (28) anliegt, wobei das Umschaltventil (24)
- in der ersten Stellung den Probeneinlaß (56) mit einem Ende der Dosierschleife (22) und das andere Ende der Dosierschleife (22) mit einem Abfallanschluß (42) verbindet und
- in der zweiten Stellung ein Ende der Dosierschleife (22) mit einem Trägerflüssigkeitsanschluß (38) und das andere Ende der Dosierschleife (22) mit einem Analysengerätanschluß (40) verbindet,
c) eine Dosiernadel (20), welche durch einen Stellmechanismus mit ihrem vorderen Ende einmal in ein Probengefäß (10) und einmal abdichtend in einen den Probeneinlaß (56) des Umschaltventils (24) bildenden, gerade durch den beweglichen Teil (26) verlaufenden Probeneinlaßkanal (128) einführbar ist und
d) eine Probenpumpe (66), welche mit dem hinteren Ende der Dosiernadel (20) verbunden ist und durch welche Probenflüssigkeit aus dem Probengefäß (10) in die Dosiernadel (20) einsaugbar ist, wenn sich das vordere Ende der Dosiernadel (20) in dem Probengefäß (10) befindet, und durch welche Probenflüssigkeit aus der Dosiernadel (20) herausdrückbar und in die Dosierschleife (22) übertragbar ist, wenn sich die Dosiernadel (20) in dem Probeneinlaß (56) des Umschaltventils (24) befindet und das Umschaltventil (24) in seiner ersten Stellung ist,
**dadurch gekennzeichnet, daß**
e) die Dosiernadel (20) an ihrem vorderen Ende eine sich zum Ende hin verjüngende Dichtfläche (138) bildet und
f) der Probeneinlaßkanal (128) in dem Dichtkörper (108) des Umschaltventils (24) einen geraden ersten Abschnitt (130) grösseren Querschnitts aufweist, in welchen das vordere Ende der Dosiernadel (20) einführbar ist, sowie
- einen damit in Verbindung stehenden zweiten Abschnitt (132) geringeren Querschnitts, der in der Steuerfläche (110) zwischen Dichtkörper (108) und stillstehendem Teil (28) mündet, und
- eine Ringschulter (136) zwischen dem ersten und dem zweiten Abschnitt (130, 132), die komplementär zu der Dichtfläche (138) der Dosiernadel (20) ist.

2. Dosiereinrichtung nach Anspruch 1, **dadurch** **gekennzeichnet, daß** in dem beweglichen Teil (26) des Umschaltventils (24) eine Nadelführung (122) mit einem Führungskanal (124) für die Dosiernadel (20) vorgesehen ist, wobei sich der Führungskanal (124) in dem äußeren Ende trichterförmig erweitert.

3. Dosiereinrichtung nach Anspruch 1 oder 2, **dadurch** **gekennzeichnet, daß**
a) die Dosiernadel (20) an einem Zahnstangenkörper (140) angebracht ist, der verschiebbar in einem Träger (142) geführt und mit einer längsverlaufenden Zahnleiste (148) versehen ist, und
b) die Zahnleiste (148) in Eingriff mit einem Ritzel (150) ist, das durch einen Stellmotor (152) antreibbar ist.

4. Dosiereinrichtung nach Anspruch 3, **dadurch gekenn****zeichnet, daß** der Stellmotor (152) ein Schrittmotor ist.

5. Dosiereinrichtung nach Anspruch 3 oder 4, **dadurch** **gekennzeichnet, daß**
a) der Zahnstangenkörper (140) hülsenförmig ist,
b) in dem hülsenförmigen Zahnstangenkörper (140) ein Nadelträger (154) geführt ist; durch welchen sich die Dosiernadel (20) in Längsrichtung erstreckt und in welchem die Dosiernadel (20) so gehaltert ist, daß sie an einem ersten Ende des Nadelträgers (154) aus diesem herausragt, und
c) der Nadelträger (154) an seinem ersten Ende an einem Anschlag (156) anliegt, während eine an dem Zahnstangenkörper (140) abgestützte, vorgespannte Feder (158) an seinem gegenüberliegenden zweiten Ende anliegt.

6. Dosiereinrichtung nach einem der Ansprüche 3 bis 5, **dadurch gekennzeichnet, daß**
a) an dem Träger (142) ein Flaschenniederhalter (184) parallel zu dem Zahnstangenkörper (140) verschiebbar geführt ist,
b) der Flaschenniederhalter (184) von einer Feder (198) in Vorschubrichtung des Zahnstangenkörpers (140) vorbelastet ist und
c) an dem Zahnstangenkörper (140) ein Mitnehmer (200) vorgesehen ist, an welchem der Flaschenniederhalter (184) unter dem Einfluß der Feder (198) anliegt.

7. Dosiereinrichtung nach Anspruch 6, **dadurch** **gekennzeichnet, daß** an dem Flaschenniederhalter (184) ein Betätigungsglied (202) vorgesehen ist, welches einen Schaltvorgang aus löst, wenn der Flaschenniederhalter (184) mit dem Zahnstangenkörper (140) weiter als bis zur Höhe üblicher Probengefäße mitgenommen wird.

8. Dosiereinrichtung nach einem der Ansprüche 1 bis 7, **dadurch gekennzeichnet, daß**
a) der bewegliche Teil des Umschaltventils (24) ein gegenüber dem stillstehendem Teil (Stator) verdrehbarer Rotor (26) ist und
b) die erste und die zweite Stellung des Rotors (26) durch zwei Anschläge (206, 208) bestimmt sind,
c) die Umschaltung durch einen Drehantrieb (212) erfolgt,
- dessen Antrieb parallel zu der Achse des Rotors (26) ist,
- der mit dem Rotor (26) über ein Gestänge (220) verbunden ist, und
- der jeweils bei Erreichen einer der Anschläge (206, 208) abschaltbar ist, und
d) in dem Gestänge (220) Federglieder (226, 228) vorgesehen sind.

9. Dosiereinrichtung nach Anspruch 8, **dadurch** **gekennzeichnet, daß**
a) das Gestänge (220) einen mit dem Drehantrieb (212) verbundenen Schwenkhebel (216) aufweist, der an seinem Ende einen Kulissenstein (222) trägt,
b) das Gestänge (220) weiterhin einen mit dem Rotor (26) verbundenen Schwenkhebel (204) aufweist,
c) die Schwenkhebel (216, 204) durch einen Lenker (218) verbunden sind und
d) der Kulissenstein (222) an dem Lenker (218) verschiebbar geführt und zwischen zwei gegeneinanderwirkenden, vorgespannten Federn (226, 228) gehalten ist.

10. Dosiereinrichtung nach einem der Ansprüche 1 bis 9, **dadurch gekennzeichnet, daß** die Probenpumpe (66) als einzige Pumpe über ein Schaltventil (62) wahlweise mit einem Behälter (70) mit Trägerflüssigkeit oder mit der Dosiernadel (20) verbindbar ist.

11. Dosiereinrichtung nach einem der Ansprüche 1 bis 10, **dadurch gekennzeichnet, daß** ein Verbindungskanal des beweglichen Teiles des Umschaltventils sich über einen solchen Winkel erstreckt, daß er beim Umschalten aus der zweiten in die erste Stellung eine Verbindung zwischen dem besagten anderen Ende der Dosierschleife und dem Abfallanschluß herstellt, bevor eine Verbindung zwischen dem Probeneinlaß und dem besagten einen Ende der Dosierschleife hergestellt wird.

12. Dosiereinrichtung nach Anspruch 10, **dadurch** **gekennzeichnet, daß**
a) der stillstehende Teil des Umschaltventils sechs um jeweils 60° gegeneinander winkelversetzte Anschlüsse aufweist, von denen
- ein erster Anschluß mit dem besagten einen Ende der Dosierschleife verbunden ist,
- ein zweiter Anschluß mit einem Abfallanschluß verbunden ist,
- ein dritter Anschluß mit dem besagten Abfallanschluß verbunden ist,
- ein vierter Anschluß mit dem besagten anderen Ende der Dosierschleife verbunden ist,
- ein fünfter Anschluß mit dem Tägerflüssigkeitsanschluß verbunden ist und
- ein sechster Anschluß mit einem Analysengeräteanschluß verbunden ist,
b) der bewegliche Teil zwei Verbindungskanäle aufweist, von denen
- ein erster Verbindungskanal sich über etwa 60° erstreckt und
- ein zweiter Verbindungskanal gegenüber dem ersten Verbindungskanal in einem Winkelabstand von etwa 60° von dem ersten Verbindungskanal vorgesehen ist und sich über mehr als 60° erstreckt, und
c) der Probeneinlaß in einem Winkelabstand von 60° von dem ersten Verbindungskanal in entgegengesetzter Richtung angeordnet ist.

## Claims

1. Dosing device for analytical instruments, particularly for liquid chromatography, containing
a) a dosing loop (22),
b) a change-over valve (24) including a stationary part (28) and a part (26) which is movable between a first and a second position relative to the stationary part (28), which comprises a sample inlet (56) and which engages the stationary part (28) through a sealing body, said change-over valve (24)
- connecting, in the first position, the sample inlet (56) to one end of the dosing loop (22) and the other end of the dosing loop (22) with a waste port (42) and
- connecting, in the second position, one end of the dosing loop (22) to a carrier liquid port (38) and the other end of the dosing loop (22) to an analytical instrument port (40),
c) a dosing needle (20) which is introduceable, by means of an actuating mechanism, with its front end into a sample vessel (10) at one time and, at another time, sealingly into a sample inlet passage (128) which forms the sample inlet (56) of the change-over valve (24) and extends straight through the movable part (26), and
d) a sample pump (66) which is connected to the rear end of the dosing needle (20) and by means of which sample liquid can be aspirated from the sample vessel (10) into the dosing needle (20), when the front end of the dosing needle (20) is located inside the sample vessel (10), and by means of which sample liquid can be forced out from the dosing needle (20) and transferred into the dosing loop (22), when the dosing needle (20) is located within the sample inlet (56) of the change-over valve (24) and the change-over valve (24) assumes its first position,
**characterised in that**
e) the dosing needle defines, at its front end, a sealing surface (138) which tapers towards the end, and
f) the sample inlet passage (128) in the sealing body (108) of the change-over valve (24) comprises a straight first section (130) of greater cross-section into which first section the front end of the dosing needle (20) is introduceable, as well as
- a second section (132) communicating therewith, having a smaller cross-section and opening into the control surface (110) intermediate the sealing body (108) and the stationary part (28), and
- an annular shoulder (136) located between the first and the second section (130 and 132, respectively) and formed complementary to the sealing surface (138) of the dosing needle (20).

2. Dosing device according to claim 1, **characterised in that** a needle guideway (122) including a guide passage (124) for the dosing needle (20), is provided in the movable part (26) of the change-over valve (24), said guide passage (124) widening in a funnel-shaped manner in the external end.

3. Dosing device according to claim 1 or 2, **characterised in** **that**
a) the dosing needle (20) is attached to a rack body (140) which is displaceably guided in a carrier (142) and provided with a lengthwise extending toothed ledge (148), and
b) the toothed ledge (148) meshes with a pinion (150) driveable by means of a servo motor (152).

4. Dosing device according to claim 3, **characterised in that** the servo motor (152) constitutes a stepping motor.

5. Dosing device according to claim 3 or 4, **characterised in** **that**
a) the rack body (140) has the shape of a sleeve,
b) a needle carrier (154) is guided in the sleeve-shaped rack body (140), the dosing needle (20) extending in lengthwise direction through the needle carrier and being held therein such that the dosing needle protrudes from a first end of the needle carrier (154), and
c) a first end of the needle carrier (154) engages a stop (156) while a preloadeded spring (158), which is supported at the rack body (140), engages its opposite second end.

6. Dosing device according to any one of claims 3 to 5, **characterised in that**
a) a bottle holding-down device (184) is displaceably guided at the carrier (142) parallel to the rack body (140),
b) the bottle holding-down device (184) is preloaded by a spring (198) in advancing direction of the rack body (140), and
c) an entraining member (200) is provided at the rack body (140), the bottle holding-down device (198) engaging the entraining member under the action of the spring (198).

7. Dosing device according to claim 6, **characterised in that** an actuating member (202) is provided at the bottle holding-down device (184) and initiates a change-over operation when the bottle holding-down device (184) is entrained by the rack body (140) farther than up to the level of conventional sample vessels.

8. Dosing device according to any one of claims 1 to 7, **characterised in that**
a) the movable part of the change-over valve (24) constitutes a rotor (26) which is rotatable relative to the stationary part (stator), and
b) the first and second position of the rotor (26) are defined by two stops (206 and 208, respectively),
c) the change-over is effected by rotary drive means (212),
- which has a drive parallel to the axis of the rotor (26),
- which is connected to the rotor (26) by means of a linkage (220), and
- which is deactivatable upon reaching either one of the stops (206,208), and
d) spring members (226,228) are provided in the linkage (220).

9. Dosing device according to claim 8, **characterised in that**
a) the linkage (220) comprises a pivot lever (216) which is connected to the rotary drive means (212) and carries a guide block (222) at its end,
b) the linkage further comprises a pivot lever (204) connected to the rotor (26),
c) the pivot levers (216,204) are interconnected by means of a link (218), and
d) the guide block (222) is displaceably guided at the link (218) and held between two counteracting preloaded springs (226,228).

10. Dosing device according to any one of claims 1 to 9, **characterised in that** the sample pump (66) constitutes the only one pump which is selectively connectable to either a container (70) containing carrier liquid or the dosing needle (20) via a change-over valve (62).

11. Dosing device according to any one of claims 1 to 10, **characterised in that** a connecting passage in the movable part of the change-over valve extends through an angle such that the connecing passage, upon changing over from the second into the first position, establishes communication between said other end of the dosing loop and the waste port prior to establishing communication between the sample inlet and said one end of the dosing loop.

12. Dosing device according to claim 10, **characterised in that**
a) the stationary part of the change-over valve comprises six ports which are angularly mutually offset relative to each other by 60°, of which
- a first port is connected to said one end of the dosing loop,
- a second port is connected to a waste port,
- a third port is connected to said waste port,
- a fourth port is connected to said other end of the dosing loop,
- a fifth port is connected to the carrier liquid port, and
- a sixth port is connected to an analytical instrument port,
b) the movable part contains two connecting passages of which
- a first connecting passage extends through about 60° and
- a second connecting passage is provided at an angular spacing of about 60° from the first connecting passage and extends through more than 60°, and
c) the sample inlet is disposed at an angular spacing of 60° from the first connecting passage in opposite direction.

## Revendications

1. Dispositif de dosage pour des appareils d'analyse, en particulier pour la chromatographie de liquide, comprenant
(a) une boucle de dosage (22),
(b) une soupape d'inversion (24) munie d'un élément immobile (28) et d'un élément (26) mobile par rapport à l'élément immobile (28) entre une première et une seconde position, élément mobile qui présente une entrée d'échantillon (56) et qui, avec un corps d'étanchéité (108), est en contact avec l'élément immobile (28), la soupape d'inversion (24)
- reliant, dans une première position, l'entrée d'échantillon (56) à une extrémité de la boucle de dosage (22) et l'autre extrémité de la boucle de dosage (22) à un raccord de déchets, et
- reliant, dans une seconde position, une extrémité de la boucle de dosage (22) à un raccord de liquide porteur (38) et l'autre extrémité de la boucle de dosage (22) à un raccord d'appareil d'analyse (40),
(c) une aiguille de dosage (20) susceptible d'être introduite par un mécanisme de commande avec son extrémité avant une fois dans un récipient d'échantillon (10) et une fois de manière étanchante dans un canal d'entrée d'échantillon (128) formant l'entrée d'échantillon (56) de la soupape d'inversion (24) et s'étendant étroitement à travers l'élément mobile (26), et
(d) une pompe d'échantillon (66) reliée à l'extrémité arrière de l'aiguille de dosage (20) et par laquelle du liquide d'échantillon est susceptible d'être aspiré du récipient d'échantillon (10) dans l'aiguille de dosage (20) lorsque l'extrémité avant de l'aiguille de dosage (20) se trouve dans le récipient d'échantillon, et par laquelle du liquide d'échantillon est susceptible d'être pressé hors de l'aiguille de dosage (20) et transmis dans la boucle de dosage (22) lorsque l'aiguille de dosage (20) se trouve dans l'entrée d'échantillon (56) de la soupape d'inversion (24) et la soupape d'inversion (24) se trouve dans sa première position,
**caractérisé par le fait que**
(e) l'aiguille de dosage (20) forme sur son extrémité avant une surface d'étanchéité (138) se rétrécissant vers l'extrémité, et
(f) le canal d'entrée d'échantillon (128) présente dans le corps d'étanchéité (108) de la soupape d'inversion (24) une première section droite (130) d'une coupe transversale relativement grande dans laquelle l'extrémité avant de l'aiguille de dosage (20) peut être introduite, ainsi que
- une seconde section (132) en communication avec celle-ci et ayant une coupe transversale plus petite débouchant dans la surface de commande (110) entre le corps d'étanchéité (108) et l'élément immobile (28), et
- un épaulement annulaire (136) entre la première et la seconde section (130, 132), épaulement qui est complémentaire à la surface d'étanchéité (138) de l'aiguille de dosage (20).

2. Dispositif de dosage selon la revendication 1, **caractérisé par le fait qu'**un guidage d'aiguille (122) muni d'un canal de guidage (124) pour l'aiguille de dosage (20) est prévu dans l'élément mobile (26) de la soupape d'inversion (24), le canal de guidage (124) s'élargissant dans l'extrémité extérieure en forme tronconique.

3. Dispositif de dosage selon la revendication 1 ou 2, **caractérisé par le fait que**
(a) l'aiguille de dosage (20) est fixée sur un corps de crémaillère (140) guidé dans un support (142) de sorte à être déplacable, et muni d'une baguette de rive (148) longitudinal, et
(b) la baguette de rive (148) est en engrenage avec un pignon (150) susceptible d'être entraîné par un servomoteur (152).

4. Dispositif de dosage selon la revendication 3, **caractérisé par le fait que** le servomoteur (152) est un moteur pas à pas.

5. Dispositif de dosage selon la revendication 3 ou 4, **caractérisé par le fait que**
(a) le corps de crémaillère (140) a une forme de manchon,
(b) un support d'aiguille (154) est guidé dans le corps de crémaillère (140) en forme de manchon, support d'aiguille à travers lequel s'étend l'aiguille de dosage (20) en direction longitudinale et dans lequel l'aiguille de dosage (20) est tenu de sorte que sur une première extrémité du support d'aiguille (154) elle déborde de celle-ci, et
(c) la première extrémité du support d'aiguille (154) est en contact avec une butée (156) tandis qu'un ressort (158) prétendu supporté par le corps de crémaillère (140) est en contact avec sa seconde extrémité opposée.

6. Dispositif de dosage selon l'une des revendications 3 à 5, **caractérisé par le fait que**
(a) un dispositif de presse-bas de bouteille (184) est guidé sur le support (142) parallèlement au corps de crémaillère (140) de sorte à être déplacable,
(b) le dispositif de presse-bas de bouteille (184) est préchargé par un ressort (198) dans la direction d'avance du corps de crémaillère (140), et
(c) un entraîneur (200) est prévu sur le corps de crémaillère (140), le dispositif de presse-bas de bouteille (184) étant en contact avec cet entraîneur sous l'action du ressort (198).

7. Dispositif de dosage selon la revendication 6, **caractérisé par le fait qu'**un membre d'actionnement (202) est prévu sur le dispositif de presse-bas de bouteille (184), membre qui déclenche un procédé de commutation lorsque le dispositif de presse-bas de bouteille (184) est entraîné avec le corps de crémaillère (140) plus loin que jusqu'à la hauteur de récipients d'échantillon conventionnels.

8. Dispositif de dosage selon l'une des revendications 1 à 7, **caractérisé par le fait que**
(a) l'élément mobile de la soupape d'inversion (24) est un rotor (26) rotatif par rapport à l'élément immobile (stator), et
(b) la première et la seconde position du rotor (26) sont déterminées par deux butées (206, 208),
(c) l'inversion est effectuée par un entraînement rotatif (212),
- dont l'entraînement est parallèle à l'axe du rotor (26),
- qui est relié au rotor par un système de tiges (220), et
- qui peut être mis hors circuit respectivement en arrivant à l'une des butées (206, 208), et
(d) des membres de ressort (226, 228) sont prévus dans le système de tiges.

9. Dispositif de dosage selon la revendication 8, **caractérisé par le fait que**
(a) le système de tiges (220) présente un levier de pivotement (216) relié à l'entraînement rotatif (212) et portant sur son extrémité un coulisseau (222),
(b) le système de tiges (220) présente, en outre, un levier de pivotement (204) relié au rotor (26),
(c) les leviers de pivotement (216, 204) sont reliés par une bielle (218), et
(d) le coulisseau (222) est guidé sur la bielle (218) de sorte à être déplacable et est tenu entre deux ressorts (226, 228) prétendus agissant l'un contre l'autre.

10. Dispositif de dosage selon l'une des revendications 1 à 9, **caractérisé par le fait que** la pompe d'échantillon (66) comme seule pompe est susceptible d'être reliée par une soupape d'inversion à choix à un récipient (70) contenant du liquide porteur ou à l'aiguille de dosage (20).

11. Dispositif de dosage selon l'une des revendications 1 à 10, **caractérisé par le fait qu'**un canal de connexion de l'élément mobile de la soupape d'inversion s'étend sur un tel angle que lors de l'inversion de la seconde dans la première position, il établit une communication entre ladite autre extrémité de la boucle de dosage et le raccord de déchets avant d'établir une communication entre l'entrée d'échantillon et ladite extrémité de la boucle de dosage.

12. Dispositif de dosage selon la revendication 10, **caractérisé par le fait que**
(a) l'élément immobile de la soupape d'inversion présente six raccords respectivement angulairement décalés de 60°, dont
- un premier raccord est relié à ladite extrémité de la boucle de dosage,
- un second raccord est relié à un raccord de déchets,
- un troisième raccord est relié audit raccord de déchets
- un quatrième raccord est relié à ladite autre extrémité de la boucle de dosage,
- un cinquième raccord est relié au raccord de liquide porteur, et
- un sixième raccord est relié à un raccord d'appareil d'analyse,
(b) l'élément mobile présente deux canaux de connexion, dont
- un premier canal de connexion s'étend sur environ 60°, et
- un second canal de connexion est prévu en face du premier canal de connexion à un écart angulaire d'environ 60° par rapport au premier canal de connexion et s'étend sur plus de 60°, et
(c) l'entrée d'échantillon est disposé à un écart angulaire de 60° du premier canal de connexion dans la direction opposée.
